Europäisches Patentamt

(19) European Patent Office

Office européen des brevets

(11) Numéro de publication: **0 081 415**
**B1**

(12) **FASCICULE DE BREVET EUROPEEN**

(45) Date de publication du fascicule du brevet:
11.09.85

(51) Int. Cl.⁴: **H 04 N 9/67**

(21) Numéro de dépôt: **82402162.0**

(22) Date de dépôt: **26.11.82**

(54) Dispositif de matriçage pour caméra de télévision en couleurs, et codeur et caméra comportant un tel dispositif.

(30) Priorité: **09.12.81 FR 8123031**

(43) Date de publication de la demande:
**15.06.83 Bulletin 83/24**

(45) Mention de la délivrance du brevet:
**11.09.85 Bulletin 85/37**

(84) Etats contractants désignés:
**DE GB NL**

(56) Documents cités:
**SMPTE JOURNAL, vol. 87, no. 1, janvier 1978, pages 15-19, New York, USA Y. ETO et al.: "Digital processing amplifier and color encoder"**

(73) Titulaire: **SOCIETE D'ELECTRONIQUE DE LA REGION PAYS de LOIRE - SEREL, 74, rue du Surmelin, F-75020 Paris (FR)**

(72) Inventeur: **Vacher, Michel, THOMSON-BRANDT SCPI 173, bld. Haussmann, F-75379 Paris Cedex 08 (FR)**

(74) Mandataire: **Grynwald, Albert et al, THOMSON-CSF SCPI 173, Bld Haussmann, F-75379 Paris Cedex 08 (FR)**

## Description

L'invention est relative à un dispositif de matriçage pour caméra de télévision en couleurs ainsi qu'à un codeur et une caméra comportant un tel dispositif.

On sait que pour que les systèmes de télévision en couleurs soient compatibles avec les systèmes de télévision en noir et blanc il est nécessaire que le signal de luminance Y soit lié aux signaux primaires de couleurs rouge R, vert V et bleu B par la relation suivante:

$$Y = 0,586\,V + 0,299\,R + 0,115\,B\,.$$

On sait aussi que pour obtenir des signaux de bonne qualité à un prix peu élevé on cherche de plus en plus à réaliser les circuits des caméras de télévision en technique numérique.

A cet effet, on a déjà proposé (SMPTE Journal, Volume 87 n° 1, Janvier 1978, page 17) un dispositif de matriçage dans lequel les coefficients de signaux de vert, de rouge et de bleu ont des valeurs telles qu'ils puissent être formés exclusivement par des connexions à décalge de bits, notamment vers les poids faibles. Un tel dispositif est d'une réalisation particulièrement simple et économique. Le circuit de matriçage du document antérieur permet d'obtenir un signal de luminance ayant la valeur suivante:

$$Y = (2^{-1} + 2^{-4})\,V + (2^{-2} + 2^{-4})\,R + 2^{-3}\,B = 0,5625\,V + 0,3125\,R + 0,125\,B\,.$$

Ce dispositif connu est basé sur le principe suivant: si on ajoute le chiffre O à la fin d'un nombre N on multiplie ce dernier par la base dans laquelle est écrit ce nombre c'est-à-dire par 2 pour les nombres binaires. Ainsi pour multiplier par 2 un nombre binaire présenté sur des sorties parallèles il suffit de décaler ces sorties d'une unité vers les bits de poids fort. De même pour multiplier par 4, c'est-à-dire $2^2$, on décale ces sorties de deux unités vers les bits de poids fort.

Inversement pour diviser par 2, 4, 8 etc. . . . un nombre binaire sur des sorties parallèles on décale ces sorties d'une unité, deux unités, trois unités . . . vers les bits de poids plus faible.

On peut ainsi réaliser des coefficients multiplicateurs de nombres binaires par de simples connexions qui n'affectent pas la rapidité du circuit dans lequell elles se trouvent à condition toutefois que ces coefficients ne dépendent que de puissances de deux.

Mais on a consaté que les coefficients obtenus avec le circuit de matriçage connu ont une valeur trop éloignée de la valeur idéale pour conférer une restitution des couleurs et des tons qui soit suffisamment satisfaisante.

L'invention remédie à cet inconvénient. Elle fournie un circuit pratiquement aussi simple que celui déjà connu mais avec une qualité nettement supérieure.

A cet effet, le circuit de l'invention est caractérisé en ce que le signal de luminance $Y_1$ a la valeur suivante:

$$Y_1 = \left(\frac{1}{2}\,V + \frac{1}{4}\,R + \frac{1 + \frac{1}{2}}{16}\,B\right)\left(1 + \frac{1}{8} + \frac{1}{16}\right) \tag{1}$$

Bien que cette valeur de luminance ne corresponde pas exactement à la formule théorique de luminance Y indiquée plus haut on a cependant constaté qu'elle donnait des résultats satisfaisants en pratique, meilleurs que ceux obtenus avec le dispositif de matriçage antérieurement connu.

D'autres caractéristiques et avantages de l'invention apparaîtront avec la description de certains de ses modes de réalisation, celle-ci étant effectuée en se référant aux dessins ci-annexés sur lesquels:

la figure 1 est un schéma destiné à expliquer le principe d'un décalage de bits,

la figure 2 est un schéma de dispositif de matriçage selon l'invention, et

la figure 3 est une variante de la figure 2.

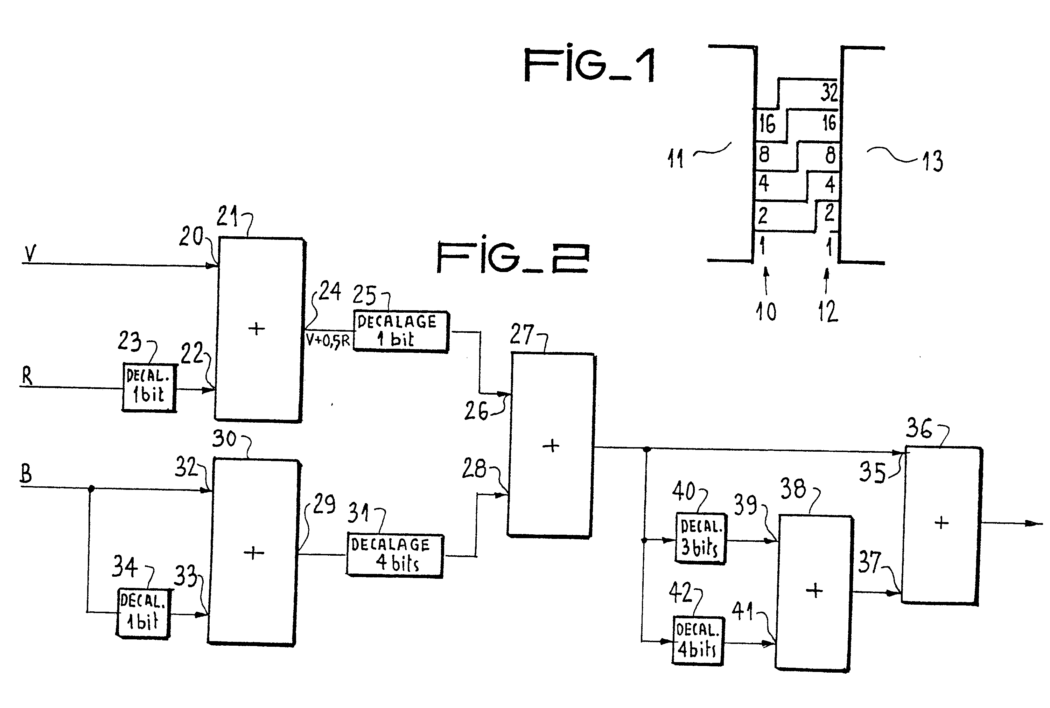

On se réfère tout d'abord à la figure 1. Des signaux numériques binaires apparaissent sur des bornes de sortie 10 d'un organe numérique 11. Les valeurs maximales de ces signaux ont été indiquées sur ces bornes de sortie:

$$1, 2, 2^2 = 4, 2^3 = 8, 2^4 = 16.$$

Ces signaux numériques binaires sont transmis avec un décalage de 1 bit vers les poids forts sur des entrées 12 d'un autre organe numérique 13. Les valeurs maximales des signaux binaires ont également été portées au-dessous de chaque entrée des entrées 12, c'est-à-dire: 1, 2, 4, 8, 16 et 32.

Ainsi le signal binaire sur les entrées 12 a un nombre de bits qui dépasse d'une unité le nombre de bits du signal binaire sur les sorties 10 et son dernier chiffre binaire (le moins significatif) est 0. On sait que, dans ces conditions, le signal sur les entrées 12 est le double du signal sur les sorties 10.

Ainsi pour multiplier par 2 il suffit d'effectuer une connexion à décalage de 1 bit vers les poids forts. De même pour effectuer une multiplication par 4, 8, 16, etc. . . . on effectue un décalage vers les bits de poids forts, respectivement de 2, 3, 4 bis, etc. . . .

2

Réciproquement pour effectuer des multiplications par 1/2, 1/4, 1/8, etc. . . . on effectue des décalages vers les bits de poids faibles de 1, 2, 3 bits, ect. . . .

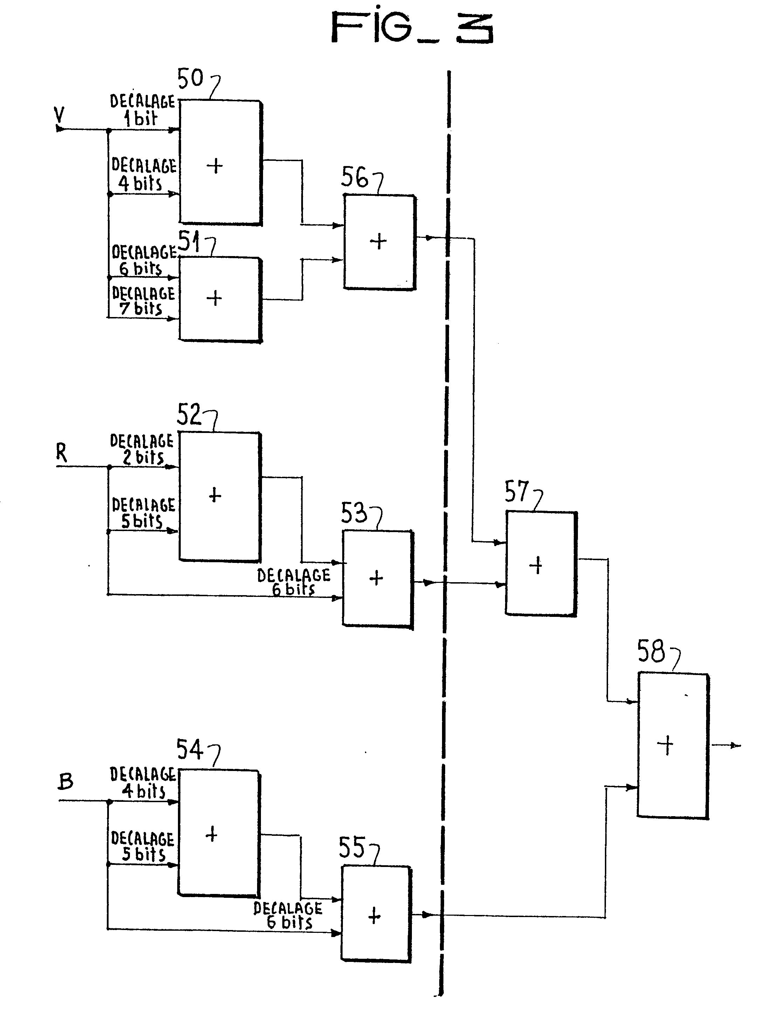

On se réfère maintenant à la figure 2 sur laquelle est représenté un dispositif de matriçage selon l'invention qui ne fait appel qu'à des décalages de bits et à des additionneurs à deux entrées chacun.

Dans cet exemple les signaux de couleurs: rouge R, vert V et bleu B sont chacun à huit bits.

Le signal de vert V est appliqué directement sur la première entrée 20 d'un additionneur 21 à deux entrées dont la seconde entrée 22 reçoit le signal de rouge R par l'intermédiaire d'une connexion 23 à décalage d'un bit vers les poids faibles et qui effectue donc une multiplication par 1/2. Bien entendu toutes les entrées et sorties de signaux sont du type parallèle.

La sortie 24 de l'additionneur 21 fournit ainsi le signal V + 0,5 R qui est transmis, par l'intermédiaire d'une autre connexion 25 à décalage d'un bit vers les poids faibles, à la première entrée 26 d'un autre additionneur 27 à deux entrées.

La seconde entrée 28 de cet additionneur 27 est reliée à la sortie 29 d'un additionneur 30 par l'intermédiaire d'une connexion 31 à décalage de quatre bits vers les poids les plus faibles, c'est-à-dire effectuant une division par 16.

La première entrée 32 de l'additionneur 30 reçoit directement le signal de bleu B tandis que la seconde entrée 33 de cet additionneur 30 reçoit ce même signal de bleu par l'intermédiaire d'une connexion 34 à décalage d'un bit vers les poids faibles (division par 2).

Le signal qui apparaît sur la sortie de l'additionneur 27 est:

$$0,84375\,Y = 0,5\,V + 0,25\,R + 0,09375\,B \tag{2}$$

Pour obtenir Y on multiplie le signal de sortie de l'additionneur 27 par 1 + 1/8 + 1/16 car:

$$\frac{1}{0,84} \simeq 1 + \frac{1}{8} + \frac{1}{6} \tag{3}$$

A cet effet la sortie de l'additionneur 27 est reliée à la première entrée 35 d'un additionneur 36 à deux entrées dont la seconde entrée 37 est connectée à la sortie d'encore un autre additionneur 38 qui reçoit sur sa première entrée 39 le signal de sortie de l'additionneur 27 par l'intermédiaire d'une connexion 40 à décalage de trois bits vers les poids faibles (multiplication par 1/8). La seconde entrée 41 de l'additionneur 38 est également reliée à la sortie de l'additionneur 27 mais par l'inermédiaire d'une connexion 42 à décalage de quatre bits vers les poids faibles, c'est-à-dire une multiplication par 1/16.

On obtient ainsi en sortie de l'additionneur 36 un signal égal à 1,002 Y qui peut être assimilé au signal de luminance Y.

Bien que les coefficients de R, V et B ne soient pas strictement égaux à ceux correspondant à la formule théorique de la luminance, l'expérience a montré qu'il n'y a pas de déformation perceptible des couleurs ni de déformation des teintes lors de la réception sur un téléviseur couleurs.

On se réfère maintenant à la figure 3. Celle-ci est une variante de la figure 2. Dans la pratique on préférera cependant la réalisation de la figure 2 car elle comporte un nombre inférieur d'additionneurs et de connexions à décalages de bits.

La réalisation de la figure 3 est basée sur la constatation suivante:

$$0,586 \simeq \frac{1}{2} + \frac{1}{2^4} + \frac{1}{2^6} + \frac{1}{2^7} = 0,5859375$$

$$0,299 \simeq \frac{1}{2^2} + \frac{1}{2^6} + \frac{1}{2^6} = 0,296875 \tag{4}$$

$$0,115 \simeq \frac{1}{2^4} + \frac{1}{2^5} + \frac{1}{2^6} = 0,109375$$

Le signal vert V est appliqué d'une part sur les deux entrées d'un additionneur 50 par l'intermédiaire de connexions à décalages vers les bits de poids faibles respectivement d'un bit et quatre bits et d'autre part sur les deux entrées d'un autre additionneur 51 par des connexions à décalages de respectivement 6 et 7 bits.

Le signal de rouge R est appliqué sur les deux entrées d'un additionneur 52 par des connexions à décalages de respectivement 2 et 5 bits. Ce signal de rouge est également appliqué sur la seconde entrée d'un additionneur 53 par l'intermédiaire d'une connexion à décalages de 6 bits, la première entrée de cet additionneur 53 recevant le signal de sortie de l'additionneur 52.

Le signal de bleu B est connecté aux entrées d'un additionneur 54 par des décalages respectivement de 4 et 5 bits. Ce signal de bleu est également appliqué sur la seconde entrée d'un additionneur 55 par une connexion à décalages de six bits. La première entrée de cet additionneur 55 reçoit le signal de sortie de l'additionneur 54.

Les sorties des additionneurs 50 et 51 sont connectées aux entrées respectives d'un additionneur 56.

Les sorties des additionneurs 53 et 56 sont reliées aux entrées respectives d'un additionneur 57 dont la sortie est reliée à la première entrée d'un additionneur 58. Ce dernier additionneur 58 reçoit sur sa

3

seconde entrée le signal de sortie de l'additionneur 55. Le signal de luminance Y apparaît sur la sortie de l'additionneur 58.

L'invention vise non seulement un dispositif de matriçage numérique mais également un codeur, notamment pour le procédé SECAM, qui cornporte ce dispositif de matriçage ainsi qu'une caméra de télévision comportant ce codeur.

## Revendications

1. Dispositif de matriçage pour caméra de télévision en couleurs destiné à former le signal de luminance ($Y_1$) à partir de signaux numériques binaires de vert (V), de rouge (R) et de bleu (B), dans lequel les coefficients des signaux de vert, de rouge et de bleu ont des valeurs telles qu'ils puissent être formés exclusivement par des connexions à décalages de bits, notamment vers les poids faibles, caractérisé en ce que le signal de luminance ($Y_1$) a la valeur suivante:

$$Y_1 = \left( \frac{1}{2} V + \frac{1}{4} R + \frac{1+\frac{1}{2}}{16} B \right) \left( 1 + \frac{1}{8} + \frac{1}{16} \right)$$

2. Dispositif selon la revendication 1, caractérisé en ce qu'il comprend un premier additionneur (21) recevant sur sa première entrée (20) le signal de vert (V) et sur sa seconde entrée (22) le signal de rouge (R) par l'intermédiaire d'une connexion (23) à décalage de 1 bit, un second additionneur (30) dont la première entrée (32) reçoit directement le signal de bleu (B) et dont la seconde entrée (33) reçoit ce signal de bleu (B) par l'intermédiaire d'une connexion (34) à décalage de 1 bit, et un troisième additionneur (27) dont la première entrée (26) est reliée à la sortie (24) du premier additionneur par une connexion (25) à décalage de 1 bit et dont la seconde entrée (28) est reliée à la sortie (29) du deuxième additionneur (30) par l'intermédiaire d'une connexion (31) à décalage de 4 bits.

3. Dispositif selon la revendication 2, caractérisé en ce qu'il comprend un quatrième additionneur (36) dont la première entrée (35) est reliée directement à la sortie du troisième additionneur (27) et dont la seconde entrée (37) est reliée à la sortie d'un cinquième additionneur (38), les première (39) et deuxième (41) entrées de ce cinquième additionneur (38) étant reliées à la sortie du troisième additionneur (27) par l'intermédiaire de connexions (40, 42) à décalages de respectivement 3 et 4 bits.

4. Codeur pour caméra de télévision en couleurs, notamment pour le procédé SECAM, caractérisé en ce qu'il comprend un dispositif de matriçage selon l'une quelconque des revendications précédentes.

5. Caméra de télévision en couleurs, caractérisé en ce qu'elle comprend un codeur selon la revendication 4.

## Patentansprüche

1. Matriziervorrichtung für eine Farbfernsehkamera, die dazu bestimmt ist, das Leuchtkraftsignal ($Y_1$) ausgehend von binären digitalen Grün- (V), Rot- (R) und Blau- (B) -Signalen zu bilden, wobei die Koeffizienten der Grün-, Rot- und Blau-Signale solche Werte haben, daß sie ausschließlich durch Bitverschiebungsverbindungen, insbesondere zu den geringen Gewichten hin, gebildet werden können, dadurch gekennzeichnet, daß das Leuchtkraftsignal den folgenden Wert hat:

$$Y_1 = \left( \frac{1}{2} V + \frac{1}{4} R + \frac{1+\frac{1}{2}}{16} B \right) \left( 1 + \frac{1}{8} + \frac{1}{16} \right)$$

2. Vorrichtung nach Anspruch 1, dadurch gekennzeichnet, daß sie einen ersten Addierer (21), der an seinem ersten Eingang (20) das Grün-Signal (V) und an seinem zweiten Eingang (22) das Rot-Signal (R) über eine Verbindung (23) mit einer Verschiebung um ein Bit erhält, einen zweiten Addierer (30), dessen erster Eingang (32) direkt das Blau-Signal (B) erhält und dessen zweiter Eingang (33) dieses Blau-Signal (B) über eine Verbindung (34) mit einer Verschiebung um ein Bit erhält, und einen dritten Addierer (27) aufweist, dessen erster Eingang (26) mit dem Ausgang (24) des ersten Addierers über eine Verbindung (25) mit einer Verschiebung um ein Bit und dessen zweiter Eingang (28) mit dem Ausgang (29) des zweiten Addierers (30) über eine Verbindung (31) mit einer Verschiebung um vier Bits verbunden ist.

3. Vorrichtung nach Anspruch 2, dadurch gekennzeichnet, daß sie einen vierten Addierer (36) aufweist, dessen erster Eingang (35) direkt mit dem Ausgang des dritten Addierers (27) und dessen zweiter Eingang (37) mit dem Ausgang eines fünften Addierers (38) verbunden ist, wobei der erste (39) und zweite Eingang (41) dieses fünften Addierers (38) mit dem Ausgang des dritten Addierers (27) über Verbindungen (40, 42) mit einer Verschiebung um drei bzw. vier Bits verbunden sind.

4

4. Kodierer für eine Farbfernsehkamera, insbesondere für das SECAM-Verfahren, dadurch gekennzeichnet, daß er eine Matriziervorrichtung nach einem beliebigen der vorstehenden Ansprüche aufweist.

5. Farbfernsehkamera, dadurch gekennzeichnet, daß sie einen Kodierer nach Anspruch 4 aufweist.

## Claims

1. A matrixing device for a colour television camera conceived to produce the luminosity signal ($Y_1$) from digital binary signals of green (V), red (R) and blue (B), in which the coefficients of the signals of green, red and blue have such values that they can be formed exclusively by bits shifting connections, in particular towards the low weights, characterized in that the luminosity signal ($Y_1$) has the following value:

$$Y_1 = \left( \frac{1}{2} V + \frac{1}{4} R + \frac{1 + \frac{1}{2}}{16} B \right) \left( 1 + \frac{1}{8} + \frac{1}{16} \right)$$

2. A device according to claim 1, characterized in that it comprises a first adder (21) receiving on its first input (20) the signal of green (V) and on its second input (22) the signal of red (R) via a connection (23) with a shift of one bit, a second adder (30), the first input (32) of which receives directly the signal of blue (B) and second input (33) of which receives this signal of blue (B) via a connection (34) with a shift of one bit, and a third adder (27), the first input (26) of which is connected to the output (24) of the first adder through a connection (25) with a shift of one bit and the second input (28) of which is connected to the output (29) of the second adder (30) via a connection (31) with a shift of four bits.

3. A device according to claim 2, characterized in that it comprises a fourth adder (36), the first input (35) of which is connected directly to the outout of the third adder (27) and the second input (37) of which is connected to the output of a fifth adder (38), the first (39) and second inputs (41) of this fifth adder (38) being connected to the output of the third adder (27) via connections (40, 42) with a shift of three respectively four bits.

4. A coder for a colour television camera, in particular for the SECAM process, characterized in that it comprises a matrixing device according to any one of the preceding claims.

5. A colour television camera, characterized in that it comprises a coder according to claim 4.

5

FIG_1

FIG_2

| | 32 |
| 16 | 16 |
| 8 | 8 |
| 4 | 4 |
| 2 | 2 |
| 1 | 1 |

11

13

10   12

V

20   21

23   22

R   DECAL.
1bit

24   25
V+0,5R   DECALAGE
1 bit

27
26

+

B   32   30

34   33

DECAL.
1bit

29   31
DECALAGE
4 bits

28

+

35

40   39   38

DECAL.
3 bits

42   41

DECAL.
4 bits

37

+

36

+

0 081 415

# FIG_ 3